# EUROPEAN PATENT APPLICATION

(11) **EP 1 366 658 A1**
(43) Date of publication of application: **03.12.2003**
(21) Application number: 02425357.7
(22) Date of filing: 31.05.2002
(51) Int. Cl.: A01K 13/00, A01K 1/02

(54) **Jacket for domestic animals**

(71) Applicant: Ciuffo Gatto S.r.l. Unipersonale, 10138 Torino (IT)
(72) Inventor: Leo, Franca, 10138 Torino (IT)
(74) Representative: Gerbino, Angelo

(57) **Abstract**

The jacket for domestic animals (18), in particular small and medium-sized dogs and cats, comprises a flexible element which is intended to extend round the body of the animal (18). A handle (28), which can allow the animal (18) to be carried by the person holding it, is further associated with the external surface of the portion of the flexible element which is intended, in normal use, to be next to the back of the animal (18). The handle (28) is preferably removable in a selective manner.

## Description

The present invention relates to a jacket for domestic animals, in particular small and medium-sized dogs and cats.

More particularly, such a jacket comprises a flexible element which is intended to extend round the body of the animal in order to serve as protection from the effects of atmospheric agents and optionally to allow one end of a leash to be attached.

The object of the present invention is to provide a jacket of the type described above in order to fulfil further functions in addition to the ones described above.

According to the invention, this object is achieved by means of a jacket having the features which are specifically referred to in the appended main claim. Preferred features of the jacket of the invention are indicated in the dependent claims.

Other advantages and characteristics of the present invention will become clear from the following detailed description, which is given purely by way of non-limiting example with reference to the appended drawings, in which:
Figure 1 is a plan view of a jacket according to the invention in an unfolded, non-operative configuration,
Figure 2 is a perspective view of the jacket from Figure 1 in a tubular configuration,
Figure 3 is a perspective view of the jacket from the preceding Figures as worn by an animal,
Figure 4 is a perspective view of a detail of a further embodiment of a jacket according to the invention,
Figure 5 is a perspective view of the details in Figure 4 in a different configuration, and
Figures 6 to 8 are sectional views of some components of the jacket in Figures 4 and 5 in respective operative positions.

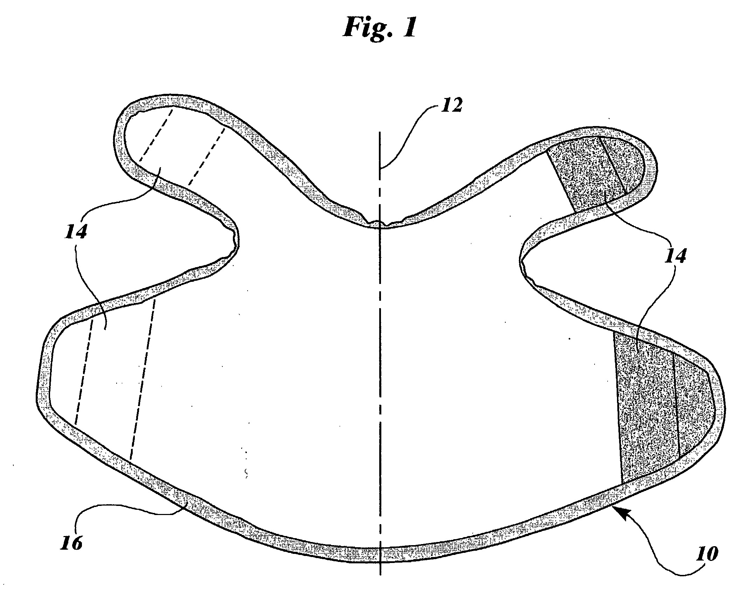

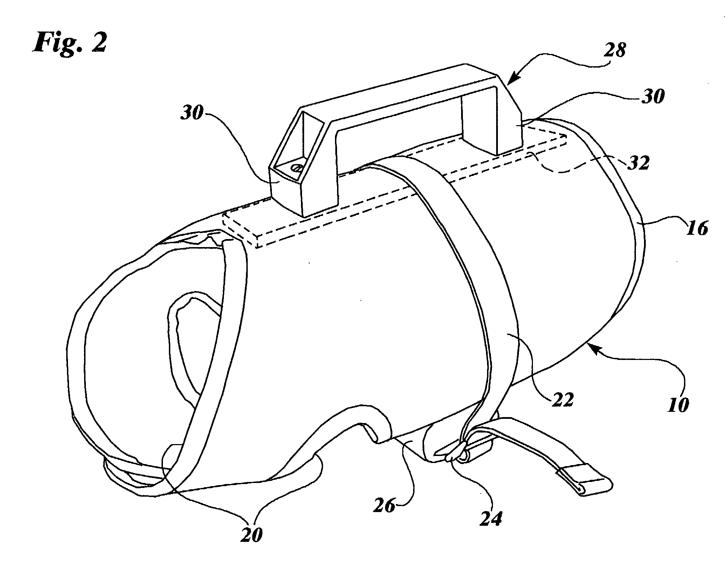

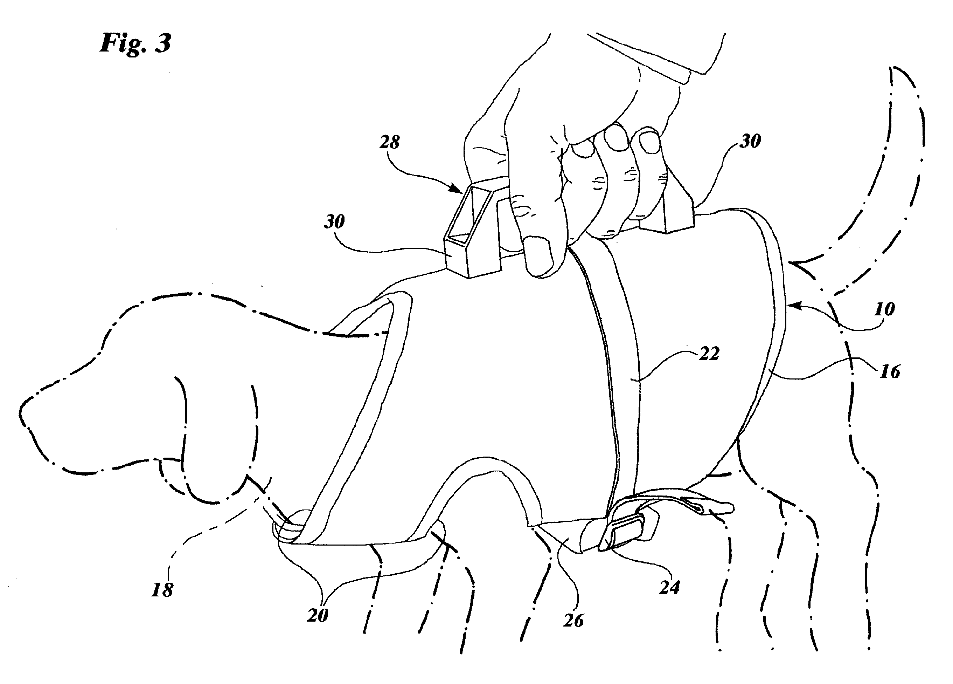

A jacket for domestic animals, in particular small and medium-sized dogs and cats, comprises (Figure 1) a flexible element which is in the form of a sheet 10 of substantially symmetrical shape relative to a central longitudinal axis 12 and having end tongues which are provided with mutual attachment means 14 of the micro-hook or Velcro type. The sheet 10 can be produced from any flexible material which is suitable for contact with the skin of animals, for example, a fabric, a non-woven fabric, an expanded plastics material, or the like, and can optionally have a layered structure and/or have cavities on the inside. The external perimeter of the sheet 10 is further fitted with padding 16. Owing to the flexibility of the sheet 10, the shape thereof and the presence of attachment means 14, it is possible (Figures 2 and 3) to fold it into a substantially tubular configuration, in which it extends round the body of the animal 18 and leaves openings 20 for the passage of the paws and the head of the animal. A strap 22 is further associated with the external surface of the sheet 10 and is provided with a buckle 24 for closing and adjusting the length, which buckle is orientated substantially coaxially with the sheet 10 when the sheet 10 takes up the tubular configuration. The strap 22 can be used to attach various articles to the jacket, for example, a small bag 26 for containing small cloths.

A handle 28 having a C-shaped body, the ends 30 of which are secured to a reinforcing bar 32 which is inserted inside the sheet 10, is associated with the external surface of the portion of the sheet 10 that is intended, in normal use, to be next to the back of the animal 18.

The jacket is worn by the animal 18 in a conventional manner in order to perform its typical functions of protection from the effects of atmospheric agents, insects, and the like, which do not involve the presence of the handle 28. When the animal 18 has to be carried, for example, in order to prevent it from soiling given surroundings or to allow it to overcome obstacles, it is sufficient (Figure 3) to grasp the handle 28 and to apply a lifting action. The flexible sheet 10 thereby acts as a harness, allowing convenient and comfortable carrying both for the animal 18, since the force which supports it is discharged homogeneously over the stomach of the animal, and for the person who is grasping the handle 28 and who is therefore aided in supporting the weight thereof. For greater security during carrying, it is further convenient to tighten the strap 22 beforehand so that the animal 18 remains held tightly in the flexible sheet 10 without being able to free itself.

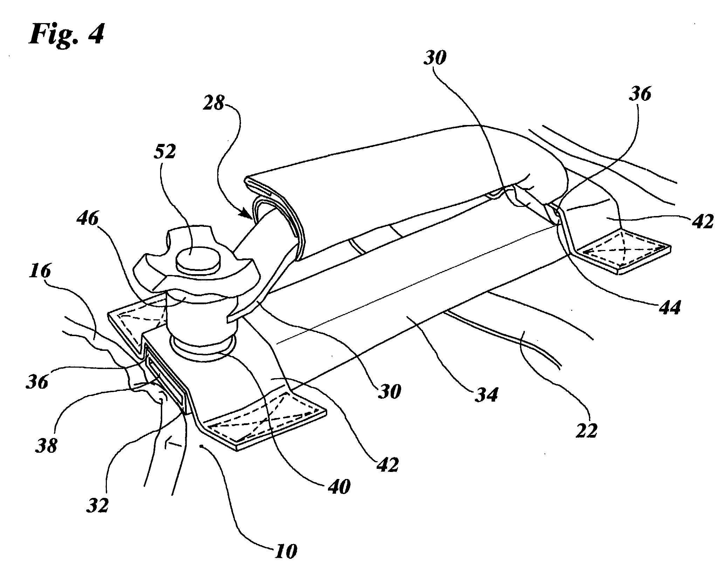

Figures 4 to 8 illustrate a second embodiment of the jacket according to the invention, wherein numerals identical to those used with reference to the preceding Figures 1 to 3 refer to identical or equivalent elements.

The structure and the general function of the jacket remain substantially unchanged relative to the above description with reference to the first embodiment. In this case, however, the handle 28 is provided with means which can allow the selective disengagement thereof from the flexible sheet 10.

A substantially rectangular strip of fabric 34 is fixed, in particular sewn, along the long sides thereof to the central region of the sheet 10. The reinforcing bar 32 has raised ends 36 and is inserted between the strip 34 and the facing region of the sheet 10 in such a manner that the ends 36 project outside the strip 34 and prevent the bar 32 from sliding.

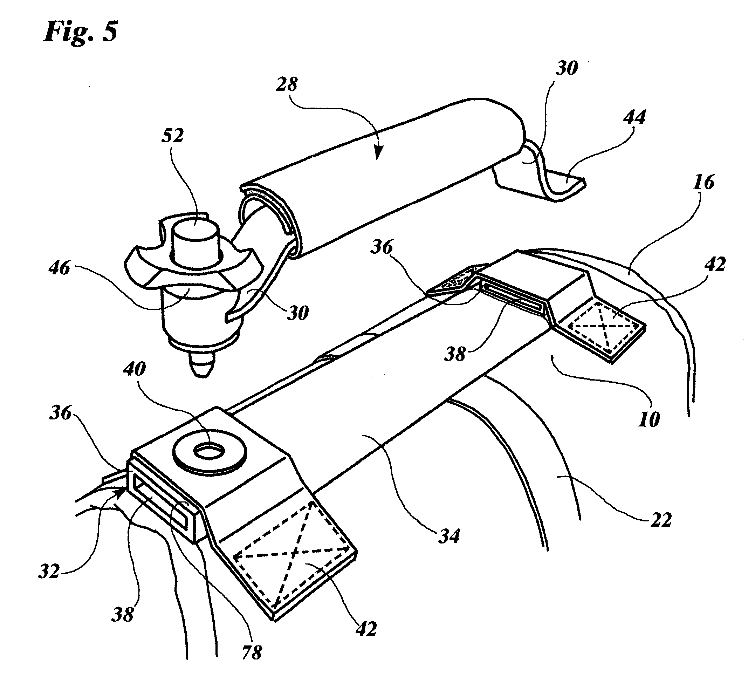

Both of the ends 36 have (Figures 4 and 5) respective longitudinal holes 38 which are orientated substantially parallel with the bar 32. Furthermore, the front end 36 has an opening 40 which is orientated substantially transversely relative to the bar 32 in a vertical direction and which communicates with the respective longitudinal hole 38.

A first strap and a second strap 42 which are suitable for securing the respective ends 36 of the bar 32 are further fixed to the sheet 10 transversely relative to the bar 32.

The handle 28 has a C-shaped body with the central piece padded, a rear end from which projects an end piece 44 which is inserted into the rear hole 38 of the bar 32 and a front end which is integral with a sleeve 46 provided with means which can be engaged selectively with the opening 40 and the front hole 38 of the bar 32.

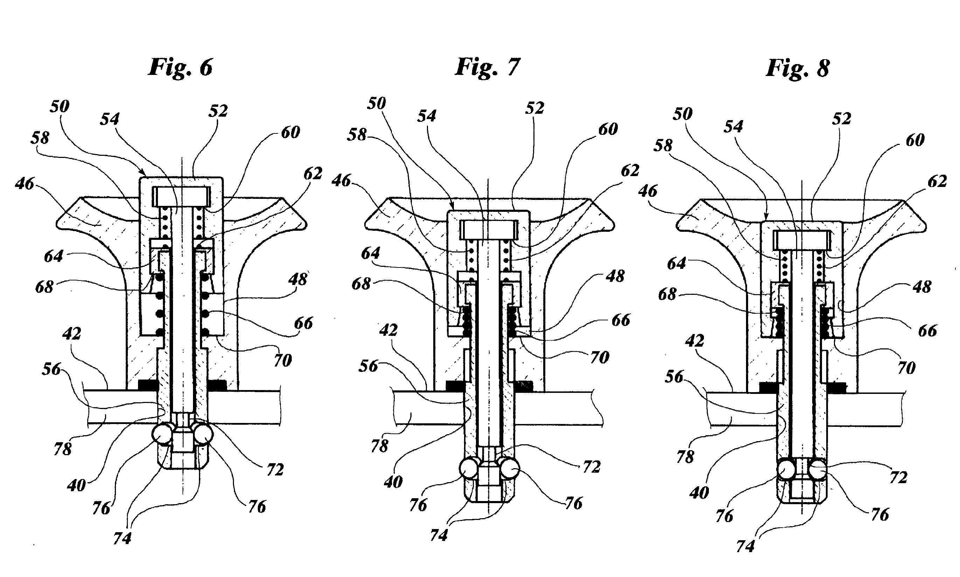

The sleeve 46 has (Figure 6) a cavity 48 which extends vertically in an axial direction and in which a slide 50 is mounted for sliding, which slide 50 comprises a head 52 which can be activated from outside, a shank 54 which is integral with the head 52 and a tubular element 56 which is mounted coaxially outside the central and distal portions of the shank 54. A first resilient member 58 is arranged between a radial shoulder 60 of the shank 54 and a first radially extending locating surface 62 of a flange 64 which is integral with the tubular element 56, and a second resilient member 66 which is more flexible than the first resilient member 58 is arranged between a second radially extending locating surface 68 of the flange 64 and an abutment surface 70 of the sleeve 46. The distal end of the shank 54 further has a circumferential channel 72 and the distal end of the tubular element 56 has, at diametrically opposing positions, a pair of radial cavities 74, in which are arranged respective spherical retaining members 76.

Under normal conditions (Figure 6), the distal end of the slide 50 projects from the sleeve 46 and extends through the vertical opening 40 of the front end 36 of the bar 32, with the shank 54 in a retracted position inside the tubular element 56. As a result, the spheres 76 project outside the tubular element and engage against the wall 78 surrounding the opening 40 of the bar 32 in such a manner that the handle 28 is secured to the sheet 10 (Figure 4).

If instead it is decided to separate the handle 28 from the sheet 10, it is necessary to press the head 52 of the slide 50 downwards in the manner of a push-button. Since the second resilient member 66 is more flexible than the first 58, it is compressed first and the whole slide 50 slides downwards, releasing the spheres 76 from contact with the wall 78 (Figure 7). Further pressure on the head 52 also causes compression of the first resilient member 58 and sliding of the shank 54 relative to the tubular element 56, in such a manner that the circumferential channel 72 is aligned with the cavities 74 and allows the spheres 76 to re-enter the tubular element 56 (Figure 8) completely. Therefore, the slide 50 is no longer engaged with the wall 78 so that it is possible to release the front end of the handle 28 from the front end 36 of the bar 32 following a simple lifting action. Afterwards, by pulling the handle 28 forwards, the end piece 44 thereof is released from the rear hole 38 of the bar 32. The handle 28 is thereby completely disengaged from the holes 38 of the bar 32, and therefore from the sheet 10 (Figure 5).

This separation can be advantageously used in order not to burden the animal 18 with the weight of the handle 28 when the animal is walking independently when wearing the jacket. If instead it is necessary to carry the animal 18, it is simply sufficient to re-attach the handle 28 to the bar 32 which is integral with the flexible sheet 10 by repeating in reverse order the operations described above. In this manner, the handle 28 constitutes a handle grip for the sheet 10 which functions as a harness for the animal 18 similarly to that mentioned with reference to the first embodiment of the jacket.

Naturally, the principle of the invention remaining the same, the forms of embodiment and details of construction may be varied widely with respect to those described and illustrated, which have been given purely by way of example, without thereby departing from the scope of the invention. In particular, the flexible element and the handle could be substantially of any shape.

## Claims

1. A jacket for domestic animals (18), in particular small and medium-sized dogs and cats, comprising a flexible element which is intended to extend round the body of the animal (18) and **characterized in that** a handle (28), which can allow the animal (18) to be carried by the person holding it, is associated with the external surface of the portion of the flexible element that is intended, in normal use, to be next to the back of the animal (18).

2. A jacket according to claim 1, **characterized in that** the flexible element is a sheet (10) of flexible material having, at the ends, mutual attachment means (14) which allow it to be folded into a substantially tubular configuration, in which it extends round the body of the animal (18) and has openings (20) for the passage of the paws and the head of the animal, the handle (28) being arranged on the external surface of the central portion of the sheet (10).

3. A jacket according to claim 2, **characterized in that** the means for mutual attachment (14) are of the micro-hook type.

4. A jacket according to any one of the preceding claims, **characterized in that** a strap (22) which is provided with a buckle (24) for closing and adjusting the length is associated with the external surface of the flexible element.

5. A jacket according to any one of the preceding claims, **characterized in that** the handle (28) has a C-shaped body, the ends (30) of which are secured to a reinforcing bar (32) which is inserted inside the element of flexible material.

6. A jacket according to any one of the preceding claims 1 to 4, **characterized in that** the handle (28) is provided with means which can allow the selective disengagement thereof from the flexible element.

7. A jacket according to claim 6, **characterized in that** the flexible element is provided with a reinforcing bar (32).

8. A jacket according to claim 7, **characterized in that** a strip of substantially rectangular fabric (34) is fixed along the long sides thereof to the sheet (10) and the reinforcing bar (32) has raised ends (36) and is inserted between the strip (34) and the facing sheet portion (10) in such a manner that the ends (36) project outside the strip (34) and prevent the bar (32) from sliding.

9. A jacket according to claim 7 or 8, **characterized in that** both of the ends (36) of the bar (32) have respective longitudinal holes (38) which are orientated substantially parallel with the bar (32) and the front end further has an opening (40) which is orientated substantially transversely relative to the bar (32) in a vertical direction and which communicates with the respective hole (38).

10. A jacket according to any one of claims 7 to 9, **characterized in that** a first strap and a second strap (42) which are suitable for securing the respective ends (36) of the bar (32) are fixed to the sheet (10) transversely relative to the bar (32).

11. A jacket according to claim 9 or 10, **characterized in that** the handle (28) has a C-shaped body having a rear end, from which projects an end piece (44) which can be inserted into the hole (38) of the rear end (36) of the bar (32) and a front end which is integral with a sleeve (46) provided with means which can be engaged selectively with the opening (40) and the hole (38) of the front end (36) of the bar (32).

12. A jacket according to claim 11, **characterized in that** the sleeve (46) has a cavity (48) which extends vertically in an axial direction and in which a slide (50) is mounted for sliding, which slide comprises a head (52) which can be activated from outside, a shank (54) which is integral with the head (52) and a tubular element (56) which is mounted coaxially outside the central and distal portions of the shank (54), a first resilient member (58) being arranged between a radial shoulder (60) of the shank (54) and a first radially extending locating surface (62) of a flange (64) which is integral with the tubular element (56), a second resilient member (66) which is more flexible than the first resilient member (58) being arranged between a second radially extending locating surface (68) of the flange (64) and an abutment surface (70) of the sleeve (46), the distal end of the shank (54) having a circumferential channel (72) and the distal end of the tubular element (56) having at least one radial cavity (74), in which is arranged a retaining member which can project partially outside the tubular element (56).

13. A jacket according to claim 12, **characterized in that** the distal end of the tubular element (56) has, at diametrically opposing positions, a pair of radial cavities (74), in which are arranged respective spherical retaining members (76).
